# EUROPEAN PATENT SPECIFICATION

(11) **EP 3 873 695 B1**
(45) Date of publication and mention of the grant of the patent: **08.04.2026**
(21) Application number: 19877994.4
(22) Date of filing: 28.10.2019
(51) Int. Cl.: B23P 15/02, F01D 11/08

(54) **METHOD AND APPARATUS FOR IMPROVING COOLING OF A TURBINE SHROUD**
VERFAHREN UND VORRICHTUNG ZUR VERBESSERUNG DER KÜHLUNG EINER TURBINENUMMANTELUNG
PROCÉDÉ ET APPAREIL POUR AMÉLIORER LE REFROIDISSEMENT D'UN CARÉNAGE DE TURBINE

(30) Priority: 29.10.2018 US 201816173410; 29.10.2018 US 201816173714
(43) Date of publication of application: 08.09.2021
(73) Proprietor: Chromalloy Gas Turbine LLC, Palm Beach Gardens, Florida 33410 (US)
(72) Inventor: STROHL, James Page, Stuart, FL 34997 (US); MEDRANO, Meriano, Okeechobee, FL 34974 (US); PARKER, David G., Jupiter, Florida 33458 (US)
(74) Representative: AWA Denmark A/S
(86) International application number: PCT/US2019/058340
(87) International publication number: WO 2020/092234

(56) References cited:
- US-A- 4 142 824
- US-A- 4 761 116
- US-A- 6 099 253
- US-A1- 2002 162 220
- US-A1- 2008 170 946
- US-A1- 2008 170 946
- US-A1- 2009 180 892
- US-A1- 2009 180 895
- US-A1- 2010 024 216
- US-A1- 2010 024 216
- US-A1- 2013 142 649
- US-A1- 2018 209 278

## Description

### TECHNICAL FIELD

Embodiments of the present disclosure relate generally to a system and process for enhancing the cooling of a gas turbine blade shroud. More specifically, embodiments of the present disclosure comprise a tip plate secured to a shroud of the turbine blade with cooling holes placed therein in order to improve cooling throughout the shroud.

Thus, the present disclosure relates to a turbine blade as defined in claim 1 and a method as defined in claim 5.

A turbine blade of this art is e.g. known from US 2010/0024216 A1 which relates to a rotor blade and method of fabricating the Another known turbine blade is disclosed in US2018209278.

### BACKGROUND OF THE DISCLOSURE

A gas turbine engine typically comprises a multi-stage compressor coupled to a multi-stage turbine via an axial shaft. Air enters the gas turbine engine through the compressor where its temperature and pressure increase as it passes through subsequent stages of the compressor. The compressed air is then directed to one or more combustors where it is mixed with a fuel source, creating a combustible mixture. The mixture is ignited in the combustors, creating a flow of hot combustion gases, which are directed into the turbine causing the turbine to rotate, thereby driving the compressor. The output of the gas turbine engine can be mechanical thrust through exhaust from the turbine or shaft power from the rotation of an axial shaft, where the axial shaft can drive a generator to produce electricity.

The compressor and turbine each comprise a plurality of rotating blades and stationary vanes having an airfoil extending into the flow of compressed air or hot combustion gases. Each blade or vane has a particular set of design criteria which must be met in order to provide the necessary work to the air or gas passing through the compressor and the turbine, respectively. However, due to the severe nature of the operating environments especially prevalent in the turbine, it is often necessary to cool the turbine components.

Depending on the location of the blade in the turbine, the blade may also include a shroud. The shroud is often located at the blade tip and extends circumferentially outward from the blade tip. The shroud is sized to contact a shroud of an adjacent blade in order to dampen any vibrations as well as to serve as a radially outermost point of the flow path for the turbine stage.

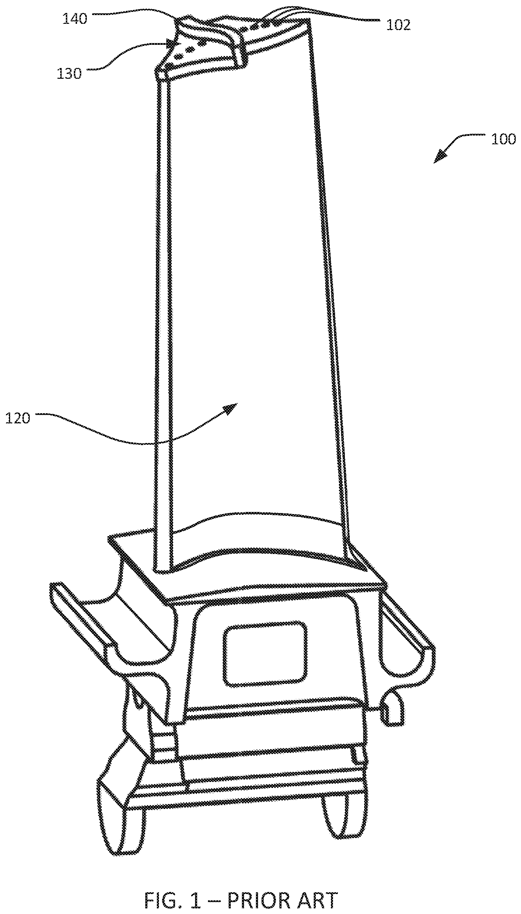

Often times, gas turbine blades are cooled and include a plurality of cooling passageways. The plurality of cooling passageways is often complex in shape and may include internal features to maximize the efficiency of cooling fluid passing therethrough. One such configuration of a cooled turbine blade is shown in FIG. 1. In this configuration, a turbine blade 100 includes a plurality of radially extending cooling holes 102 for cooling the airfoil 120. However, a tip shroud 130 is uncooled except where the cooling holes 102 discharge cooling air. This creates a large thermal gradient in the tip shroud 130 and thermal stresses between the tip shroud 130 and the airfoil 120. Also, the uncooled regions of the tip shroud 130 operate at a higher temperature than other regions of the tip shroud 130, resulting in shroud curl and potential mismatch with the adjacent shroud, resulting in possible vibrations and wear to the turbine blade shroud regions.

### BRIEF SUMMARY OF THE DISCLOSURE

The present invention relates to a turbine blade as recited in claim 1 and to a method of enhancing cooling of a turbine blade tip shroud as recited in claim 5. Further preferred embodiments are defined in the dependent claims.

These and other features of the present disclosure can be best understood from the following description and claims.

### BRIEF DESCRIPTION OF THE SEVERAL VIEWS OF THE DRAWINGS

The present disclosure is described in detail below with reference to the attached drawing figures, wherein:
FIG. 1 is a perspective view of a gas turbine blade in accordance with the prior art.
FIG. 2 is a perspective view of a gas turbine blade in accordance with an embodiment of the present disclosure.
FIG. 3 is a perspective view of a portion of the gas turbine blade of FIG. 2, in accordance with an embodiment of the present disclosure.
FIG. 4 is an exploded perspective view of the gas turbine blade of FIG. 3.
FIG. 5 is a cross section view of the shroud of the gas turbine blade of FIG. 3.
FIG. 6 is an elevation view of a gas turbine blade in accordance with a non-claimed embodiment of the present disclosure.
FIG. 7 is a perspective view of a tip plate in accordance with a non-claimed embodiment of the present disclosure.
FIG. 8 is a top elevation view of a gas turbine blade in accordance with a non-claimed embodiment of the present disclosure.
FIG. 9 is a cross section view taken through the gas turbine blade of FIG. 8.
FIG. 10 depicts a method of enhancing cooling of a turbine blade tip shroud in accordance with an embodiment of the present disclosure.
FIG. 11 depicts a method of forming a cooled tip shroud for a gas turbine blade in accordance with a non-claimed embodiment of the present disclosure.
FIG. 12 is a perspective view of a gas turbine blade in accordance with a non-claimed embodiment of the present disclosure.
FIG. 13 is a detailed perspective view of a portion of the gas turbine blade of FIG. 12, in accordance with a non-claimed embodiment of the present disclosure.
FIG. 14 is a top elevation view of the gas turbine blade of FIG. 12.
FIG. 15 is a cross section view of the gas turbine blade of FIG. 14.
FIG. 16 is an alternate cross section view of the gas turbine blade of FIG. 14.
FIG. 17 is a top elevation view of a gas turbine blade in accordance with a non-claimed embodiment of the present disclosure.
FIG. 18 is a top elevation view of a gas turbine blade in accordance with yet another non-claimed embodiment of the present disclosure.

### DETAILED DESCRIPTION OF THE DISCLOSURE

The present disclosure is intended for use in a gas turbine engine, such as a gas turbine used for aircraft engines and/or power generation. As such, the present disclosure is capable of being used in a variety of turbine operating environments, regardless of the manufacturer.

As those skilled in the art will readily appreciate, such a gas turbine engine is circumferentially disposed about an engine centerline, or axial centerline axis. The engine includes a compressor, a combustion section and a turbine with the turbine coupled to the compressor via an engine shaft. As is well known in the art, air compressed in the compressor is mixed with fuel in the combustion section where it is burned and then expanded in the turbine. The air compressed in the compressor and the fuel mixture expanded in the turbine can both be referred to as a "hot gas stream flow." The turbine includes rotors that, in response to the fluid expansion, rotate, thereby driving the compressor. The turbine comprises alternating rows of rotary turbine blades, and static airfoils, often referred to as vanes. The hot gas stream flow exiting the gas turbine engine can provide thrust for an aircraft or used in a subsequent power generation process, such as steam generation, in a combined cycle power plant.

Due to the temperatures of the hot gas stream flow, which can be well over 2,000 deg. F., it is necessary to cool the turbine blades and static airfoils, or vanes, as operating temperatures are often equal to or greater than the material capability of the cast turbine components. However, in order to most effectively cool critical surfaces of the turbine components, often a complex internal cavity of the gas turbine blade or vane is required. Producing such a complex internal cooling scheme, especially with smaller aerospace components, is extremely difficult.

The typical process for cooling airfoils and maximizing the cooling efficiency is to produce a hollow cavity within the airfoil portion of the turbine blade or vane, where the hollow cavity includes internal passageways for directing the cooling fluid through the component as well as surface features to enhance the cooling effectiveness. Due to the geometric constraints of the components, it may be necessary to cast these features into the gas turbine component, as it is not possible to machine many of the complex cooling features into the turbine component.

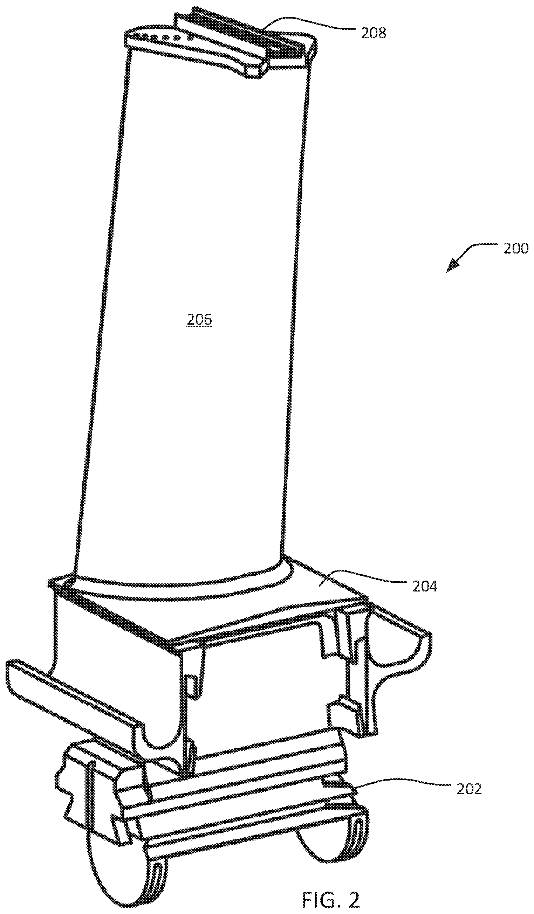

Referring initially to FIG. 2-9, various embodiments of the present disclosure are shown. FIG. 2 depicts a turbine blade 200 in accordance with an embodiment of the present disclosure. The turbine blade 200 comprises a blade attachment 202 and a platform 204 extending radially outward from the attachment 202. The blade attachment 202 and platform 204 regions are conventional in nature, as is well known to those of ordinary skill in the art.

The turbine blade 200 also comprises an airfoil 206 extending radially outward from the platform 204 and a tip shroud 208 extending circumferentially from the airfoil 206. The tip shroud 208 has one or more knife edges 210 extending radially outward from an outer surface 218 of the tip shroud 208.

One or more cooling passages 214 extend through the airfoil 206 and to the tip shroud 208. For the embodiment of the present disclosure depicted in FIGS. 2-9, the cooling passages 214 comprise a plurality of stem drilled cooling holes, which as one skilled in the art understands, are a plurality of generally radially extending cooling holes drilled after the turbine blade is cast. The one or more cooling passages 214 may also include internal cooling enhancements to turbulate the flow of cooling air. In an alternate embodiment of the present disclosure, the one or more cooling passages 214 comprises at least one cast airfoil cooling passage, where the cooling passageway is cast into the airfoil. The cast airfoil cooling passage can be a variety of shapes or configurations and may also include other heat transfer features, such as trip strips, pin fins, chevrons, or similar devices.

Referring now to FIGS, 3-5 and 7, the turbine blade 200 also comprises one or more tip plates 216 secured to the tip shroud 208. The one or more tip plates 216 are secured to the tip shroud 208 by a welding or brazing process. For example, the tip plate 216 can be laser welded, tungsten inert gas (TIG) welded, or electron beam (EB) welded to the tip shroud 208. Alternatively, the one or more tip plates 216 can be brazed to the tip shroud 208 by placing a compatible braze filler material between the tip plate 216 and a surface of the tip shroud 208 and putting the turbine blade 200 through a brazing heat treatment cycle, thereby bonding the tip plate 216 to the tip shroud 208. The tip plate 216 can be cut or stamped from a sheet metal having similar material properties to that of the turbine blade 200.

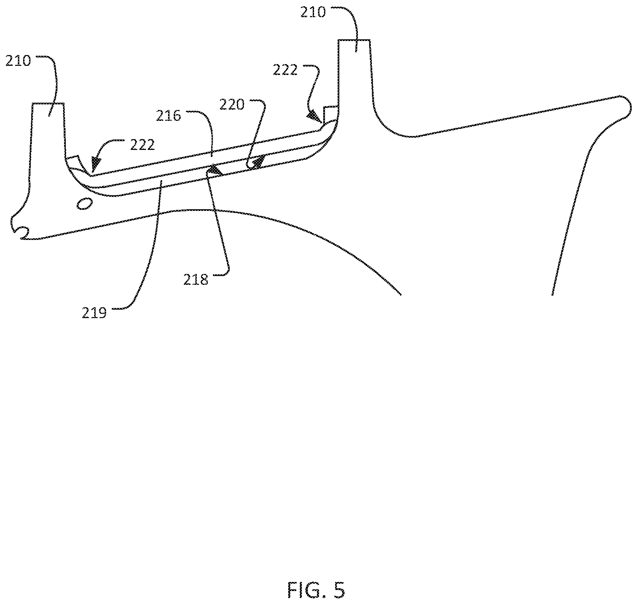

The resulting assembly creates a plenum 219 formed between the tip plate 216 and an outer surface 218 of the tip shroud 208, as shown in FIG. 5. In this configuration, the tip plate 216 has an inner surface 220 that is generally parallel to and adjacent the outer surface 218 of the tip shroud 208. The size and shape of the plenum 219 varies depending on the amount of cooling required for the tip shroud 208.

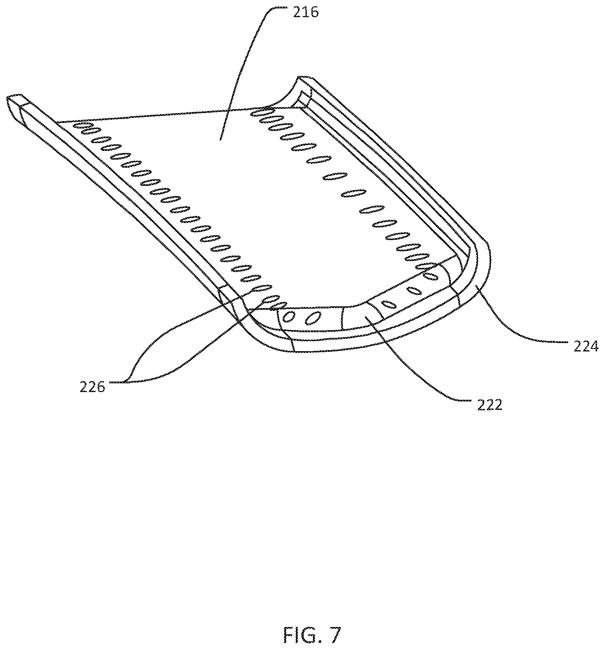

Referring now to FIGS. 5 and 7, in an embodiment of the present disclosure, the tip plate 216 further comprises one or more curved edges 222 around at least a portion of a perimeter 224 of the tip plate 216. The curved edges 222 provide a way of improving the attachment location of the tip plate 216 to the tip shroud 208. The radius of the curved edges 222 will vary depending on the configuration of the turbine blade 200 and tip shroud 208, but may lie adjacent to the one or more knife edges 210.

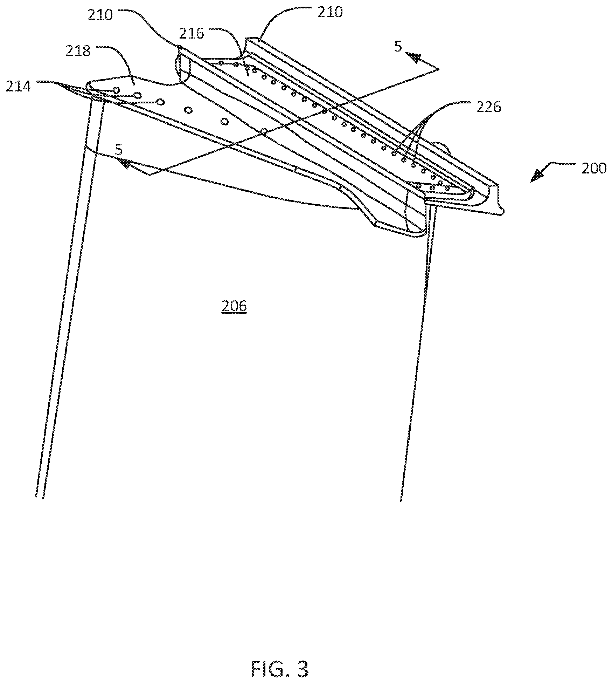

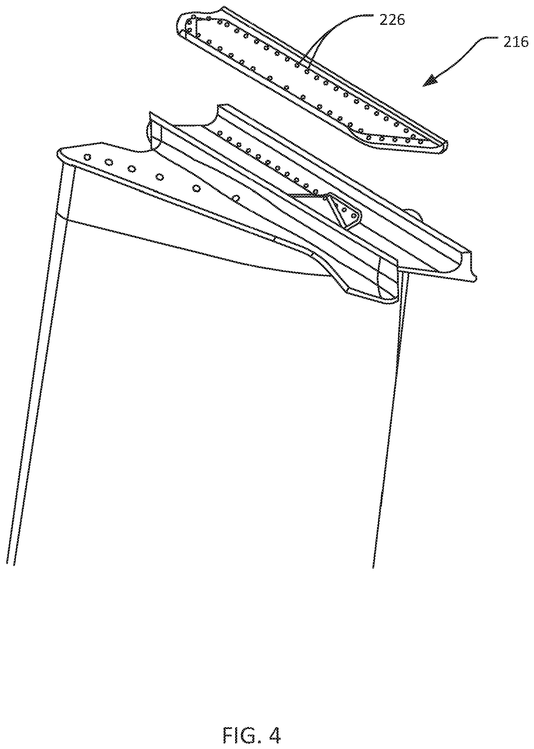

Referring now to FIGS. 3, 4, and 7, the turbine blade 200 also comprises a plurality of cooling holes 226 in the one or more tip plates 216. The plurality of cooling holes is located at a perimeter of the tip plate 216, as shown in FIGS. 4 and 7. The cooling holes 226 are located about the perimeter of the tip plate 216, and are also located adjacent one or more of the knife edges 210 of the tip shroud 208. The size, and spacing of the cooling holes 226 can vary as required in order to effectively cool the portion of the tip shroud 208 encompassed by the tip plate 216. The cooling holes 226 are oriented generally perpendicular to the tip plate 216. The cooling holes 226 are preferably placed in the tip plate 216 before the tip plate 216 is secured to the tip shroud 208. However, the cooling holes 226 can also be drilled in the tip plate 216 after the tip plate 216 is secured to the tip shroud 208. By placing the cooling holes 226 at the perimeter of the tip plate 216, cooling air supplied to the plenum 219 is drawn towards and through the cooling holes 226, thus maximizing the cooling area of the tip shroud 208 encompassed by the tip plate 216. This area of the shroud was largely uncooled in prior art turbine blade configurations.

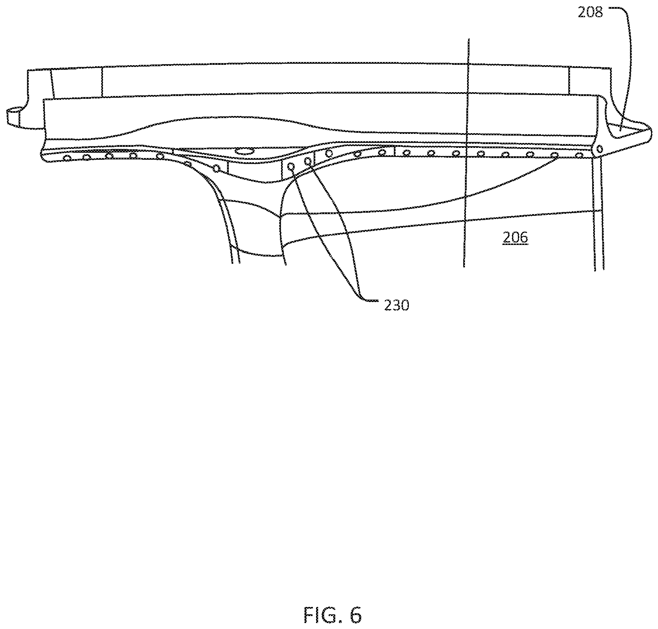

Referring now to FIG. 6, in an alternate non-claimed embodiment of the present disclosure, a plurality of shroud cooling holes 230 are positioned in the outer perimeter of the tip shroud 208. The shroud cooling holes 230 can be drilled in the sidewalls or underside (gas path side) of the tip shroud 208 and communicate with the plenum 219. In this alternate configuration, the cooling air is drawn towards edges of the tip shroud 208 to better cool edge regions of the tip shroud 208.

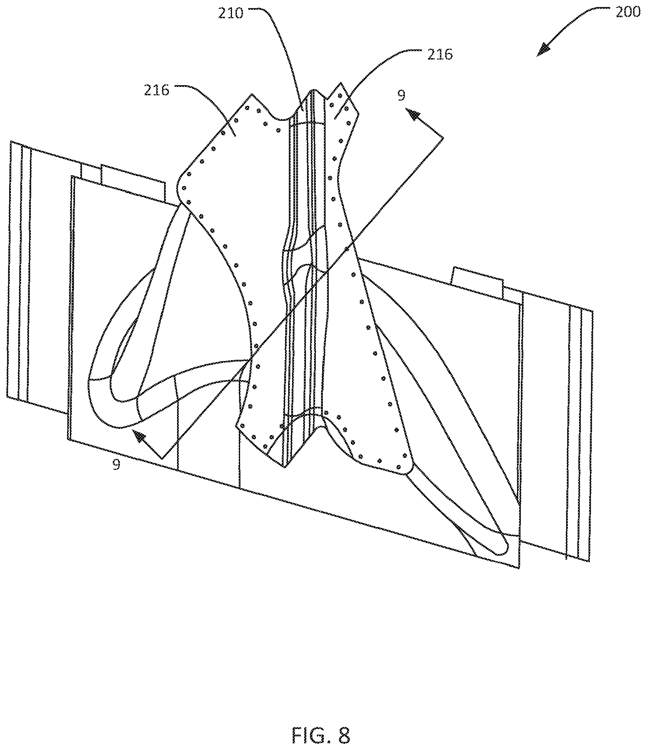

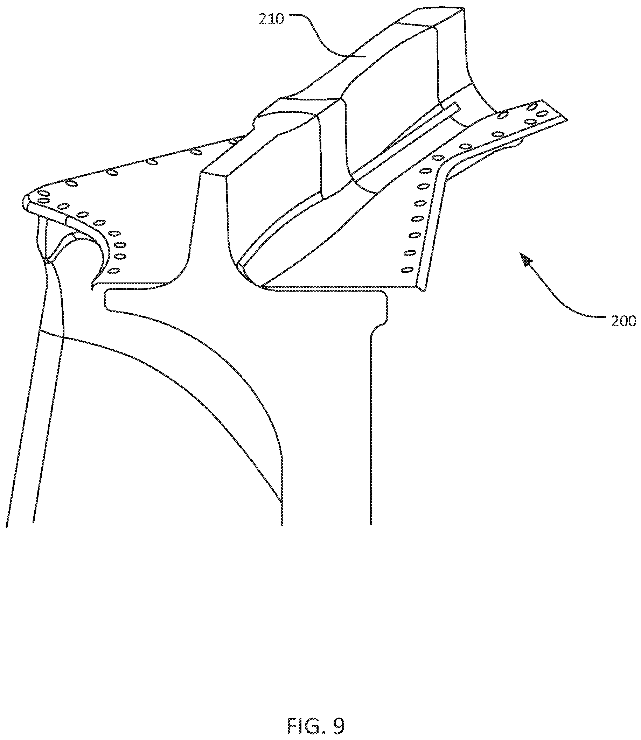

As shown in FIGS. 2-6, the turbine blade 200 contains two knife edges 210 and a tip plate 216 therebetween. An alternate non-claimed embodiment of the present disclosure is shown in FIGS. 8 and 9, and relates to a turbine blade 200 having a single knife edge 210 and multiple tip plates 216. Cooling holes 226 are positioned about the perimeter of the tip plates 216. A cross section of the tip shroud region of this alternate embodiment is depicted in FIG. 9.

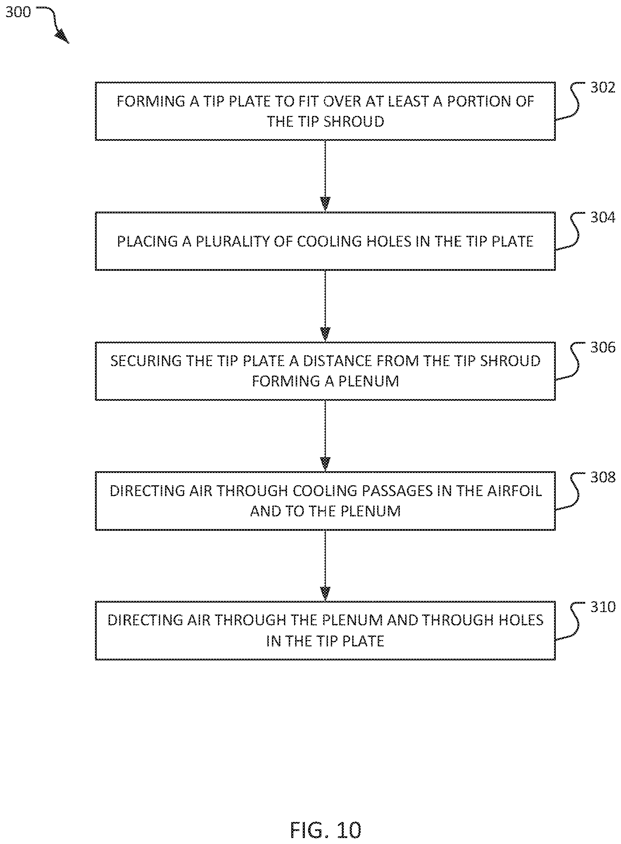

An alternate embodiment of the present disclosure is shown in FIG. 10, where a method 300 of enhancing cooling of a turbine tip shroud is provided. In a step 302, a tip plate is formed and sized to fit over at least a portion of the tip shroud. In a step 304, a plurality of cooling holes is placed in the tip plate and in a step 306, the tip plate is secured a distance from the tip shroud, thereby forming a plenum between the tip plate and the tip shroud. Then, in a step 308, a flow of air is directed through the cooling passages in the airfoil and to the plenum formed between the tip shroud and tip plate. In a step 310, the flow of air is then directed through the plenum and through the plurality of cooling holes in the tip plate to increase cooling fluid to the tip shroud.

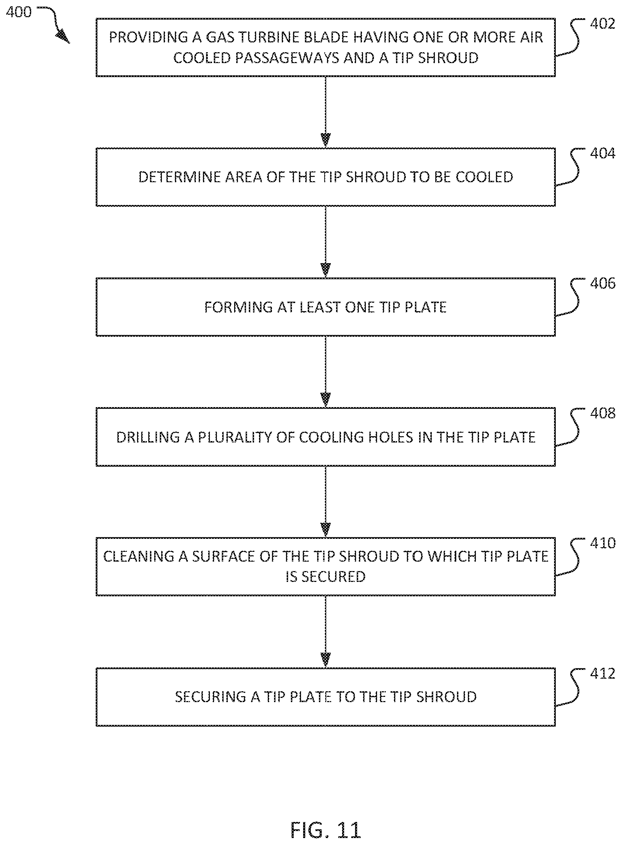

Referring now to FIG. 11, yet another non-claimed embodiment of the present disclosure is disclosed and relates to a method 400 of forming a cooled tip shroud for a gas turbine blade. The method 400 comprises the steps of providing a gas turbine blade having an air cooled passageway and a tip shroud in a step 402. In a step 404, the area of the tip shroud to be cooled is determined. The exact size of this area will depend on shroud geometry, operating temperatures, stresses, and resulting curling of the tip shroud. In a step 406, a tip plate is formed, where the tip plate is sized to be positioned over the area of the tip shroud requiring additional active cooling. In a step 408, a plurality of cooling holes is drilled in the tip plate and in a step 410, the surface of the tip shroud to which the tip plate will be secured is cleaned and prepared. In a step 412, the tip plate is fixed to the tip shroud, thereby forming a plenum between the tip shroud and the tip plate.

The apparatus and processes described above can be incorporated into a new turbine blade or as part of a repair process to a previously-operated turbine blade. Thus, embodiments of the present disclosure may allow for substantial improvements in the cooling of a turbine blade shroud.

Other non-claimed embodiments of the disclosure relate generally to a system and process for improving sealing between a turbine blade tip and a surrounding engine case, as well as for reducing blade weight and centrifugal pull on a blade disk. These embodiments specifically relate to providing a pocket in at least a portion of a blade tip shroud for reducing blade weight and corresponding load on the blade disk.

Referring back to FIG. 1, the blade 100 also includes a knife edge 140. The knife edge 140 is a generally vertical wall portion extending towards a shroud block or ring segment in the engine case (not shown). The knife edge 140 operates in close proximity to the shroud block or ring segment in order to form a seal in the gap between the rotating turbine blade and surrounding shroud block.

While shroud blocks and blades with knife edges provide a seal in the gap between the blade and a surrounding shroud block, shrouds are also a source of extra weight and cause the center of gravity of the turbine blade to move radially outward, thus creating additional load on the blade attachment when the blade rotates.

As is known, gas turbine blades are secured in a disk by a corresponding blade attachment and disk broach slot. The disk and blade combination rotate about a centerline axis of the engine, where the blades rotate at a very high rate of speed. As the blades rotate at this rate, centrifugal forces cause the weight of the blade to "pull" on the attachment surfaces of the disk in which the blade is contained, thus imparting a load on the contact surfaces of the blade and disk, resulting in high mechanical stresses in this contact area. Therefore, blade weight must be considered in order to not overload the disk and risk a blade failure.

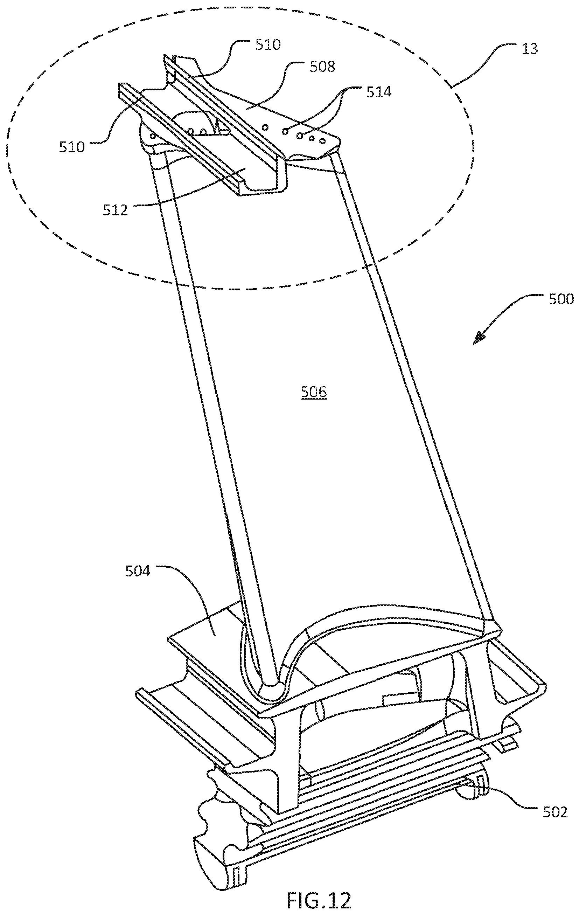

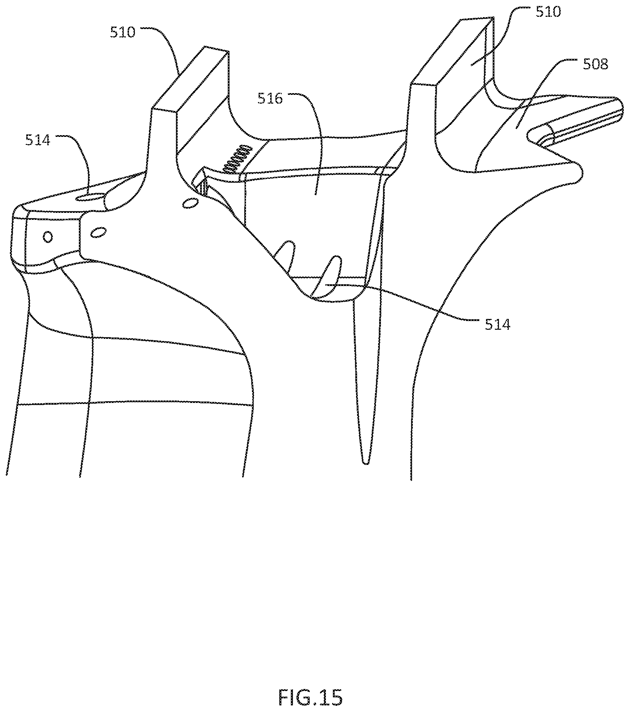

Referring now to FIGS. 12-17, various non-claimed embodiments of the present disclosure are depicted. FIG. 12 depicts a turbine blade 500 in accordance with an embodiment of the present disclosure. The turbine blade 500 comprises a blade attachment 502 and a platform 504 extending radially outward from the attachment 502. The blade attachment 502 and platform 504 regions are conventional in nature, as is well known to those of ordinary skill in the art.

The turbine blade 500 also comprises an airfoil 506 extending radially outward from the platform 504 and a tip shroud 508 extending circumferentially from the airfoil 506. The tip shroud 508 has one or more knife edges 510 extending radially outward from an outer surface 512 of the tip shroud 508.

Depending on the operating temperatures of the turbine, the turbine blade 500 may also be cooled. In an embodiment of the present disclosure, one or more cooling passages 514 extend through the airfoil 506 and to the tip shroud 508. For the non-claimed embodiment of the present disclosure depicted in FIGS. 12-16, the cooling passages 514 comprise a plurality of stem drilled cooling holes, which as one skilled in the art understands, are a plurality of generally radially extending cooling holes drilled after the turbine blade is cast. The one or more cooling passages 514 may also include internal cooling enhancements to turbulate the flow of cooling air in order to improve the heat transfer and cooling efficiency. In an alternate embodiment of the present disclosure, the one or more cooling passages 514 comprises at least one cast airfoil cooling passageway. The cast airfoil cooling passageway can take on a variety of shapes and sizes depending on the cooling requirements of the turbine blade. The present disclosure can be used with or without the one or more cooling passages 514.

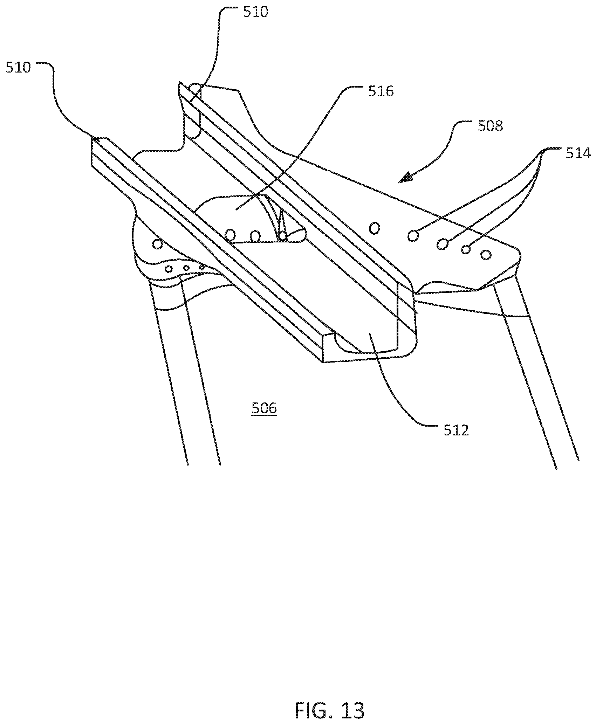

Referring now to FIGS. 13-16, the turbine blade 500 also comprises one or more pockets 516 in the tip shroud 508, where the one or more pockets 516 extend generally radially inward from the outer surface 512 of the tip shroud 508 towards the airfoil 506, and in some embodiments, into a portion of the airfoil 506. The pocket 516 is configured to remove excess weight from the gas turbine blade 500, thereby reducing pull on the blade attachment 502. Weight removed via the one or more pockets 516 is taken from areas of the tip shroud 508 and airfoil 506 without compromising the structural integrity of the shroud to airfoil interface 507. Weight is preferably removed from the tip shroud 508, as the amount of pull or load applied to a blade attachment is a function of the distance the weight is located from the engine centerline and the rotational speed of the turbine blade. Therefore, weight removed from the blade tip, such as in the tip shroud 508 will provide a greater contribution to attachment stress reduction than weight removed from other parts on the blade 500, such as the platform 504.

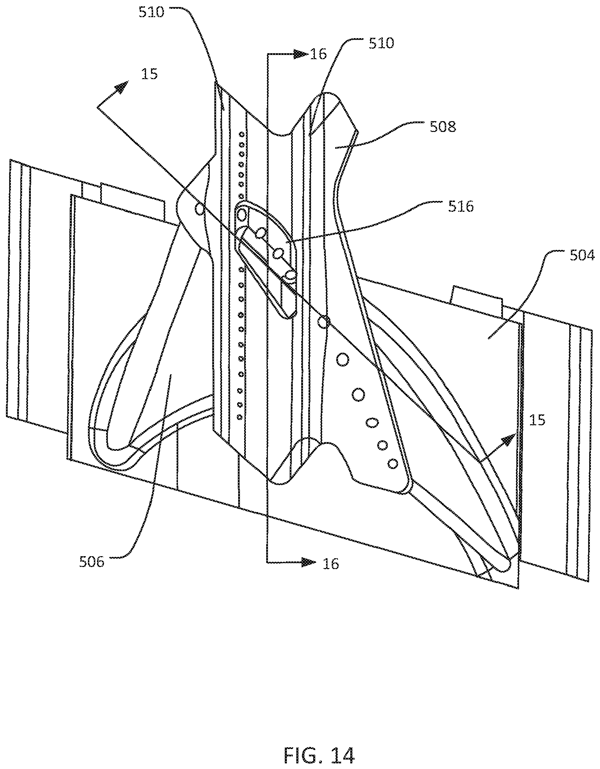

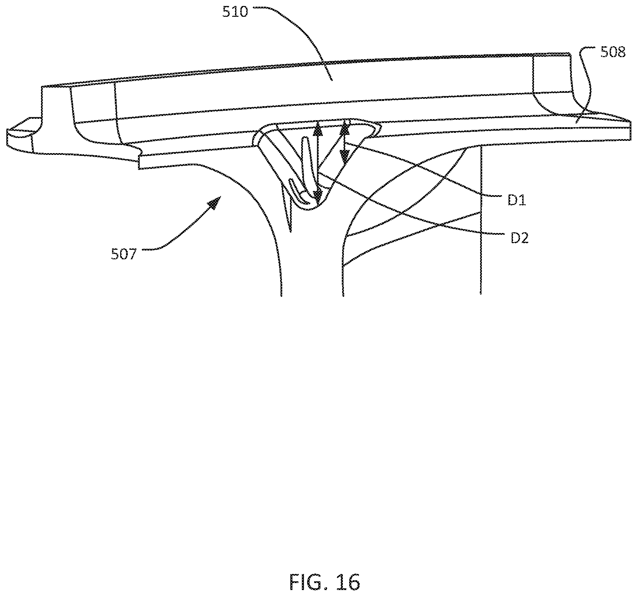

Referring to FIGS. 14-16, specific features of a representative pocket 516 are shown in greater detail. The specific size, shape, and location of the pocket 516 will vary depending on the amount of weight to be removed and the configuration of the turbine blade 500. More specifically, industrial gas turbine components used in power generation are larger than those used in aircraft engines. As such, these parts weigh more, but also have larger tip shrouds in which material may be able to be removed. Additionally, in the non-claimed embodiment shown in FIGS. 14-16, the pocket 516 has a variable depth, where the depth of the pocket is deeper in areas where the shroud 508 interfaces with the airfoil 506, designated as 507 in FIG. 16, as this region may have additional material which can be removed without adversely impacting the turbine blade structural integrity. For example, and as shown more clearly in FIG. 16, a depth D2 of pocket 516 is greater than a depth D1. For the turbine blade 500 depicted in FIGS. 14-16, one such pocket 516 removes approximately 0.039 pounds from the shroud region of turbine blade 500, thereby helping to reduce the effect of the increased blade pull associated with adding an additional knife edge to the tip shroud. The change in blade weight through the one or more shroud pockets will vary based on the size and quantity of pockets compared to size of additional knife edge added to the tip shroud.

As discussed above, the pocket 516 can be a variety of shapes, and is preferably a non-uniform configuration adhering to the curvature and shape of the airfoil 506 and tip shroud 508. In one embodiment of the present disclosure, the one or more pockets 516 have an axial length greater than a circumferential width. In another embodiment, the dimensions of the pocket extending along a chord line of the airfoil is greater than other dimensions of the pocket 516, such that the pocket 516 extends primarily along the chord of airfoil 506.

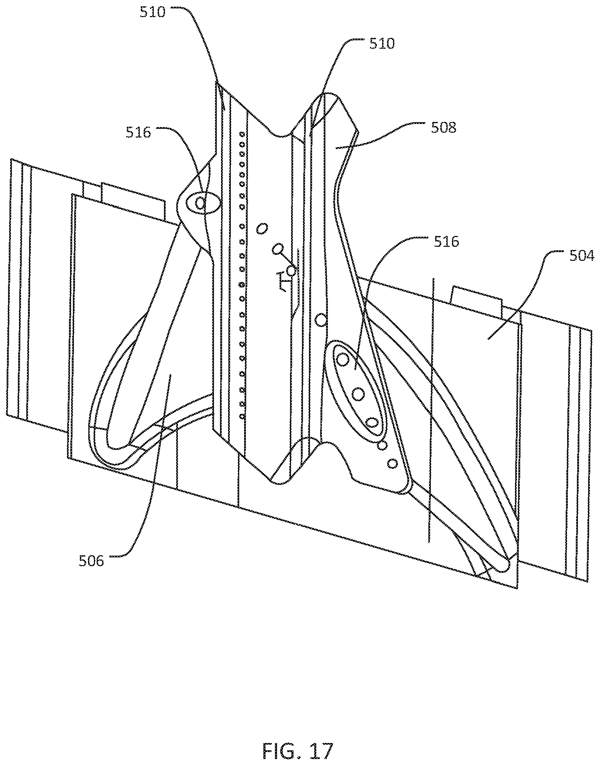

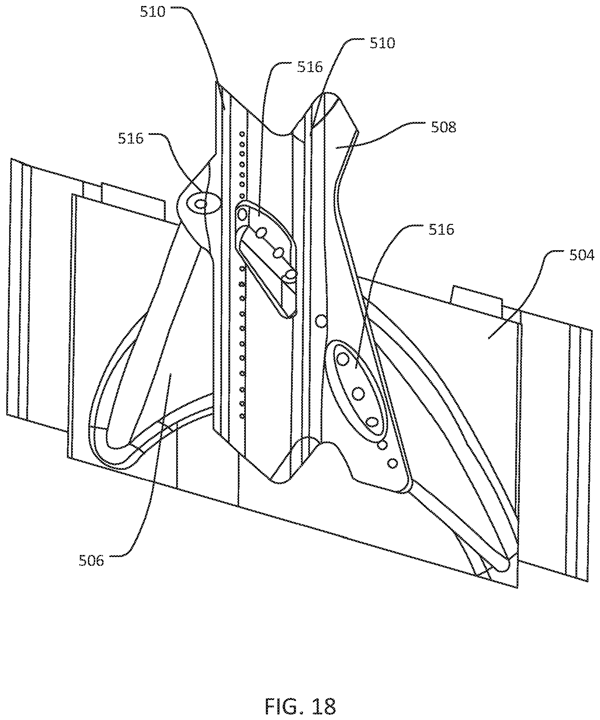

In the non-claimed embodiment of the present disclosure depicted in FIGS 13-16, one pocket 516 is positioned between two knife edges 510. However, present disclosure is not limited to placement of a single pocket 516 in the tip shroud 508. It is to be understood that the present disclosure also comprises using multiple tip pockets of varying sizes spread across the tip shroud 508. For example, the pocket 516 positioned between the knife edges 510 in FIGS. 13-16 could be comprised of multiple smaller pockets equaling the same volume and weight reduction as a single larger pocket. Alternatively, the one or more pockets 516 could be positioned on opposing and external sides of the knife edges 510 such that they are positioned closer to the leading edge and trailing edge of the airfoil 506. This alternate configuration is depicted in FIG. 17. Referring now to FIG. 18, another non-claimed embodiment of the present disclosure is depicted in which the one or more pockets 516 are position both between and external to the knife edges 510.

The pocket 516 can be placed in the tip shroud 508 of a new turbine blade or a repaired/reconditioned blade. If the pocket 516 is to be incorporated into a new turbine blade, it can be incorporated into the blade casting or through a post-casting machining process. In order to incorporate the pocket 516 into a new casting, the wax die tool can be fabricated to incorporate the pocket 516 directly in the tool by including this feature in the initial tool machining. Alternatively, an existing wax die tool can be modified by placing an insert in the shape of the pocket 516 into the die tool, such that the insert creates a void in the blade wax pattern in the shape of the pocket 516. This void is carried into the casting process such that metal is not poured into the shape of the resulting pocket 516. Alternatively, the one or more pockets 516 can be incorporated into a repair of a turbine blade by machining the pocket into the shroud region of the blade. This machining is preferably accomplished by burning the shape of the pocket into the shroud by way of an EDM electrode or other similar machining process.

Referring again to FIGS. 13, 15, and 16, the one or more pockets 516 may also encompass one or more of the cooling passages 514 for a cooled turbine blade. Where the one or more pockets 516 encompass a cooling passage 514, the flow of cooling air passing therethrough has an outward flow component away from the radial direction of the cooling passage 514. That is, this geometry change causes the air flow to also move tangentially and circumferentially with respect to the blade axis, thus improving the cooling to the area adjacent the cooling passages 514.

In a non-claimed alternate embodiment of the disclosure, an existing turbine blade can be modified to improve sealing at a tip shroud and reduce airflow passing around a tip of the turbine blade by forming at least one additional knife edge extending radially outward from the tip shroud. This additional knife edge is formed in a subsequent manufacturing process. For example, some turbine blades have a single knife edge 510 extending radially outward from the shroud 508 for sealing adjacent a turbine shroud block. However, air can still bypass this single knife edge 510. In order to minimize leakage between a turbine blade and surrounding shroud, it is desirable to have multiple knife edges as depicted in FIGS. 12-14. However, a turbine blade having multiple knife edges also increases pull on the blade disk / attachment and shifts the blade center of gravity outward compared to a blade with a single knife edge due to the extra weight on the tip. To counteract the adverse effects of the additional weight and pull on the disk, a portion of the weight added to the shroud by the additional knife edge can be removed by adding the one or more pockets 516. The additional knife edge can be formed through a variety of manufacturing techniques, such as brazing a pre-fabricated strip onto the shroud or by an additive manufacturing process. The order in which manufacturing occurs for placing the one or more pockets 516 in the blade and adding an additional knife edge is a matter of preference depending on manufacturing techniques utilized.

Although a preferred embodiment of this disclosure has been disclosed, one of ordinary skill in this art would recognize that certain modifications would come within the scope of this disclosure. For that reason, the following claims should be studied to determine the true scope and content of this disclosure. Since many possible embodiments may be made of the disclosure without departing from the scope thereof, it is to be understood that all matter herein set forth or shown in the accompanying drawings is to be interpreted as illustrative and not in a limiting sense.

From the foregoing, it will be seen that this disclosure is one well adapted to attain all the ends and objects hereinabove set forth together with other advantages which are obvious and which are inherent to the structure.

## Claims

1. A turbine blade (200) comprising:
a blade attachment (202);
a platform (204) extending radially outward from the attachment (202);
an airfoil (206) extending radially outward from the platform (204);
a tip shroud (208) extending circumferentially from the airfoil (206), the tip shroud (208) having one or more knife edges (210) extending radially outward from an outer surface (218) of the tip shroud (208);
one or more cooling passages (214) extending through the airfoil (206) and to the tip shroud (208);
one or more tip plates (216) secured to the tip shroud (208) thereby forming a plenum (219) between the outer surface (218) and the one or more tip plates (216); and,
a plurality of cooling holes (226) in the one or more tip plates (216),
wherein all of the cooling holes (226) present in the one or more tip plates (216) are positioned adjacent the one or more knife edges (210); **characterised in that** all of the cooling holes (226) present in the one or more tip plates (216) are located at a perimeter (224) of the tip plate (216), about the perimeter (224) of the tip plate (216), and along the perimeter (224) of the tip plate (216); and that all of said cooling holes (226) are oriented generally perpendicular to the tip plate (216), whereby cooling air supplied to the plenum (219) is drawn towards and through the cooling holes (226), thus maximizing the cooling area of the tip shroud (208) encompassed by the tip plate (216).

2. The turbine blade (200) of claim 1, wherein the one or more cooling passages (214) are stem drilled cooling holes, or wherein the one or more cooling passages (214) are cast into the airfoil (206).

3. The turbine blade (200) of claim 1 wherein the one or more tip plates (216) is secured to the tip shroud (208) by a welding or brazing process, and wherein preferably the tip plate (216) further comprises a curved edge (222) around at least a portion of a perimeter (224) of the tip plate (216).

4. The turbine blade (200) of claim 1, wherein the tip plate (216) has an inner surface (220) generally parallel to and adjacent the outer surface (218) of the tip shroud (208).

5. A method of enhancing cooling of a turbine blade tip shroud (208) comprising:
forming one or more tip plates (216) sized to fit over at least a portion of the tip shroud (208);
placing a plurality of cooling holes (226) in the one or more tip plates (216), whereby all of the cooling holes (226) present in the one or more tip plates (216) are located at a perimeter (224) of the tip plate (216), about the perimeter (224) of the tip plate (216), and along the perimeter (224) of the tip plate (216), and all of said cooling holes (226) are oriented generally perpendicular to the tip plate (216);
securing the one or more tip plates (216) a distance from the tip shroud (208) thereby forming a plenum (219) between the tip plate (216) and the one or more tip shrouds (208);
directing a flow of air through cooling passages (214) in an airfoil (206) of the blade (200) and to the plenum (219); and,
directing the flow of air through the plenum (219), towards and through the cooling holes (226) in the one or more tip plates (216), thus maximizing the cooling area of the tip shroud (208) encompassed by the tip plate (216).

6. The method of claim 5, wherein the one or more tip plates (216) further comprises a curved edge (222) around at least a portion of a perimeter (224) of the one or more tip plates (216).

7. The method of claim 5, wherein the one or more tip plates (216) extend between knife edges (210) of the tip shroud (208), and wherein preferably the flow of air is directed from the plenum (219), through the plurality of cooling holes (226), and towards the knife edges (210).

8. The method of claim 5, wherein the one or more tip plates (216) is secured to the tip shroud (208) by a welding or brazing process.

## Patentansprüche

1. Turbinenschaufel (200), die Folgendes umfasst:
eine Schaufelbefestigung (202);
eine Plattform (204), die sich von der Befestigung (202) radial nach außen erstreckt;
ein Schaufelblatt (206), das sich von der Plattform (204) radial nach außen erstreckt;
ein Spitzendeckband (208), das sich in Umfangsrichtung von dem Schaufelblatt (206) erstreckt, wobei das Spitzendeckband (208) eine oder mehrere Schneidkanten (210) aufweist, die sich von einer Außenfläche (218) des Spitzendeckbands (208) radial nach außen erstrecken;
einen oder mehrere Kühlkanäle (214), die sich durch das Schaufelblatt (206) und zu dem Spitzendeckband (208) erstrecken;
eine oder mehrere Spitzenplatten (216), die an dem Spitzendeckband (208) fixiert sind, wodurch eine Kammer (219) zwischen der Außenfläche (218) und der einen oder den mehreren Spitzenplatten (216) gebildet wird; und
mehrere Kühllöcher (226) in der einen oder den mehreren Spitzenplatten (216),
wobei alle Kühllöcher (226), die in der einen oder den mehreren Spitzenplatten (216) vorhanden sind, angrenzend an die eine oder die mehreren Schneidkanten (210) positioniert sind; **dadurch gekennzeichnet, dass** alle Kühllöcher (226), die in der einen oder den mehreren Spitzenplatten (216) vorhanden sind, an einem Umfang (224) der Spitzenplatte (216), um den Umfang (224) der Spitzenplatte (216) herum und entlang des Umfangs (224) der Spitzenplatte (216) angeordnet sind; und dass alle Kühllöcher (226) im Allgemeinen senkrecht zur Spitzenplatte (216) ausgerichtet sind, wodurch der Kammer (219) zugeführte Kühlluft in Richtung der und durch die Kühllöcher (226) gesaugt wird, wodurch die Kühlfläche des von der Spitzenplatte (216) umschlossenen Spitzendeckbands (208) maximiert wird.

2. Turbinenschaufel (200) nach Anspruch 1, wobei der eine oder die mehreren Kühlkanäle (214) stem-gebohrte Kühllöcher sind, oder wobei der eine oder die mehreren Kühlkanäle (214) in das Schaufelblatt (206) gegossen sind.

3. Turbinenschaufel (200) nach Anspruch 1, wobei die eine oder die mehreren Spitzenplatten (216) durch einen Schweiß- oder Lötprozess an dem Spitzendeckband (208) fixiert sind, und wobei vorzugsweise die Spitzenplatte (216) ferner eine gekrümmte Kante (222) um zumindest einen Abschnitt eines Umfangs (224) der Spitzenplatte (216) umfasst.

4. Turbinenschaufel (200) nach Anspruch 1, wobei die Spitzenplatte (216) eine Innenfläche (220) aufweist, die im Allgemeinen parallel zu der und angrenzend an die Außenfläche (218) des Spitzendeckbands (208) ist.

5. Verfahren zum Verbessern einer Kühlung eines Spitzendeckbands (208) einer Turbinenschaufel, das Folgendes umfasst:
Bilden einer oder mehrerer Spitzenplatten (216), die so dimensioniert sind, dass sie über zumindest einen Abschnitt des Spitzendeckbands (208) passen;
Platzieren mehrerer Kühllöcher (226) in der einen oder den mehreren Spitzenplatten (216), wobei alle Kühllöcher (226), die in der einen oder den mehreren Spitzenplatten (216) vorhanden sind, an einem Umfang (224) der Spitzenplatte (216), um den Umfang (224) der Spitzenplatte (216) herum und entlang des Umfangs (224) der Spitzenplatte (216) angeordnet sind und alle Kühllöcher (226) im Allgemeinen senkrecht zu der Spitzenplatte (216) ausgerichtet sind;
Fixieren der einen oder der mehreren Spitzenplatten (216) in einem Abstand von dem Spitzendeckband (208), wodurch eine Kammer (219) zwischen der Spitzenplatte (216) und dem einen oder den mehreren Spitzendeckbändern (208) gebildet wird;
Leiten eines Luftstroms durch Kühlkanäle (214) in einem Schaufelblatt (206) der Schaufel (200) und zu der Kammer (219); und
Leiten des Luftstroms durch die Kammer (219) in Richtung der und durch die Kühllöcher (226) in der einen oder den mehreren Spitzenplatten (216), wodurch die Kühlfläche des von der Spitzenplatte (216) umschlossenen Spitzendeckbands (208) maximiert wird.

6. Verfahren nach Anspruch 5, wobei die eine oder die mehreren Spitzenplatten (216) ferner eine gekrümmte Kante (222) um zumindest einen Abschnitt eines Umfangs (224) der einen oder der mehreren Spitzenplatten (216) herum umfassen.

7. Verfahren nach Anspruch 5, wobei sich die eine oder die mehreren Spitzenplatten (216) zwischen Schneidkanten (210) des Spitzendeckbands (208) erstrecken, und wobei vorzugsweise der Luftstrom von der Kammer (219) durch die mehreren Kühllöcher (226) und in Richtung der Schneidkanten (210) geleitet wird.

8. Verfahren nach Anspruch 5, wobei die eine oder die mehreren Spitzenplatten (216) durch einen Schweiß- oder Lötprozess an dem Spitzendeckband (208) fixiert wird.

## Revendications

1. Aube de turbine (200) comprenant :
un élément de fixation d'aube (202) ;
une plateforme (204) s'étendant radialement vers l'extérieur à partir de l'élément de fixation (202) ;
un profil aérodynamique (206) s'étendant radialement vers l'extérieur à partir de la plateforme (204) ;
un carénage de bout (208) s'étendant circonférentiellement à partir du profil aérodynamique (206), le carénage de bout (208) comportant un ou plusieurs bords de couteau (210) s'étendant radialement vers l'extérieur à partir d'une surface extérieure (218) du carénage de bout (208) ;
un ou plusieurs passages de refroidissement (214) s'étendant à travers le profil aérodynamique (206) et jusqu'au carénage de bout (208) ;
une ou plusieurs plaques de bout (216) solidement fixées au carénage de bout (208), formant ainsi un plénum (219) entre la surface externe (218) et la ou les plaques de bout (216) ; et,
une pluralité de trous de refroidissement (226) dans la ou les plaques de bout (216),
tous les trous de refroidissement (226) présents dans la ou les plaques de bout (216) étant positionnés adjacents à la ou aux bords de couteau (210) ; **caractérisée en ce que** tous les trous de refroidissement (226) présents dans la ou les plaques de bout (216) sont situés au niveau d'un périmètre (224) de la plaque de bout (216), autour du périmètre (224) de la plaque de bout (216), et le long du périmètre (224) de la plaque de bout (216) ; et **en ce que** tous lesdits trous de refroidissement (226) sont orientés généralement perpendiculairement à la plaque de bout (216), l'air de refroidissement fourni au plénum (219) étant ainsi aspiré vers et à travers les trous de refroidissement (226), maximisant ainsi la surface de refroidissement du carénage de bout (208) englobée par la plaque de bout (216).

2. Aube de turbine (200) selon la revendication 1, le ou les passages de refroidissement (214) étant des trous de refroidissement percés par tige, ou le ou les passages de refroidissement (214) étant coulés dans le profil aérodynamique (206).

3. Aube de turbine (200) selon la revendication 1, la ou les plaques de bout (216) étant solidement fixées au carénage de bout (208) par un procédé de soudage ou de brasage, et de préférence, la plaque de bout (216) comprenant en outre un bord incurvé (222) autour d'au moins une partie d'un périmètre (224) de la plaque de bout (216).

4. Aube de turbine (200) selon la revendication 1, la plaque de bout (216) ayant une surface intérieure (220) généralement parallèle et adjacente à la surface extérieure (218) du carénage de bout (208).

5. Procédé d'amélioration du refroidissement d'un carénage de bout (208) d'aube de turbine comprenant :
la formation d'une ou de plusieurs plaques de bout (216) dimensionnées pour s'ajuster sur au moins une partie du carénage de bout (208) ;
le placement d'une pluralité de trous de refroidissement (226) dans la ou les plaques de bout (216), tous les trous de refroidissement (226) présents dans la ou les plaques de bout (216) étant ainsi situés sur un périmètre (224) de la plaque de bout (216), autour du périmètre (224) de la plaque de bout (216) et le long du périmètre (224) de la plaque de bout (216), et tous lesdits trous de refroidissement (226) étant orientés généralement perpendiculairement à la plaque de bout (216) ;
la fixation de la ou des plaques de bout (216) à une certaine distance du carénage de bout (208), formant ainsi un plénum (219) entre la plaque de bout (216) et la ou les carénages de bout (208) ;
l'acheminement d'un flux d'air à travers des passages de refroidissement (214) dans un profil aérodynamique (206) de l'aube (200) et vers le plénum (219) ; et l'acheminement du flux d'air à travers le plénum (219), vers et à travers les trous de refroidissement (226) dans la ou les plaques de bout (216), maximisant ainsi la zone de refroidissement du carénage de bout (208) entourée par la plaque de bout (216).

6. Procédé selon la revendication 5, la ou les plaques de bout (216) comprenant en outre un bord incurvé (222) autour d'au moins une partie d'un périmètre (224) de la ou des plaques de bout (216).

7. Procédé selon la revendication 5, la ou les plaques de bout (216) s'étendant entre des bords de couteau (210) du carénage de bout (208), et de préférence le flux d'air étant acheminé depuis le plénum (219), à travers la pluralité de trous de refroidissement (226), et vers les bords de couteau (210).

8. Procédé selon la revendication 5, la ou les plaques de bout (216) étant fixées au carénage de bout (208) par un processus de soudage ou de brasage.
